# EUROPEAN PATENT APPLICATION

(11) **EP 4 753 046 A1**
(43) Date of publication of application: **03.06.2026**
(21) Application number: 24898089.8
(22) Date of filing: 26.11.2024
(51) Int. Cl.: H01M 50/244, H01M 10/04, H01M 50/502, H01M 50/271

(54) **BATTERY PACK HAVING MOUNTING HOLES FOR ASSEMBLY AND METHOD FOR ASSEMBLING BATTERY PACK**

(30) Priority: 27.11.2023 KR 20230166560
(71) Applicant: LG Energy Solution, Ltd., Seoul 07335 (KR)
(72) Inventor: HAM, Ji Won, Daejeon 34122 (KR); CHOI, Sung Hyun, Daejeon 34122 (KR)
(74) Representative: Plasseraud IP
(86) International application number: PCT/KR2024/018902
(87) International publication number: WO 2025/116495

(57) **Abstract**

Disclosed is a battery pack including a battery cell stack including a plurality of battery cells, a pack frame body configured to allow the battery cell stack to be mounted therein, a top plate coupled to an upper part of the pack frame body, and a first end plate and a second end plate coupled to both ends of an assembly of the pack frame body and the top plate, respectively, wherein a mounting hole for assembly is formed in each of the first end plate and the second end plate. Interference is reduced when mounting a pre-assembled battery pack on an assembly jig, thereby preventing assembly defects.

## Description

### [Technical Field]

This application claims the benefit of priority to Korean Patent Application No. 2023-0166560 filed on November 27, 2023, the disclosure of which is incorporated herein by reference in its entirety.

The present invention relates to a battery pack having a mounting hole for assembly and a method of assembling the battery pack. More particularly, the present invention relates to a battery pack having a mounting hole for assembly configured to prevent coupling defects when a pack frame body and an end plate are coupled to each other during assembly of the battery pack and a method of assembling the battery pack.

### [Background Art]

With the strengthening of carbon emission regulations, the demand for eco-friendly energy is increasing, and the number of apparatuses using lithium secondary batteries as an energy source is increasing.

Thereamong, lithium secondary batteries are increasingly being assembled into battery modules and battery packs even in fields that require high-output and high-capacity energy sources, such as electric vehicles.

In general, a battery pack is manufactured by receiving a battery cell stack including a plurality of battery cells connected in series and/or parallel in a pack case and assembling the same.

The pack case may include a first case configured in the form of a hexahedron with an open upper surface, i.e. a quadrangular box, and a second case configured to cover the open upper surface, wherein the first case is referred to as a monoframe.

Alternatively, the pack case may include a U-shaped U-frame having a lower surface and two side surfaces connected to the lower surface, a top plate added to an upper surface of the U-frame, and end plates added to both ends of the U-frame.

The U-frame and the top plate are coupled to each other, and the two end plates are coupled respectively to both ends of an assembly of the U-frame and the top plate by welding. At this time, if coupling positions of the assembly of the U-frame and the top plate and the end plates do not coincide with each other, assembly defects may occur.

In addition, the assembly defects may cause the position of terminals of the battery packs to deviate from the correct position, and therefore when connecting a plurality of battery packs in series and/or in parallel, the positions of the terminals to be connected to each other may become mismatched, whereby coupling may be difficult.

Therefore, it is important to align the coupling positions of the assembly of the U-frame and the top plate and the end plates with each other.

In this regard, Patent Document 1 relates to an assembly pallet for secondary batteries used with respect to a secondary battery having end plates disposed on both sides of a plurality of arranged battery cells and a lower case for attaching the battery cells to a vehicle body and a method of manufacturing a secondary battery, wherein the assembly pallet includes a positioning pin configured to position the end plates, a support sheet configured to support the end plates and a stack assembly of the secondary battery, and a base plate, the positioning pin including a primary positioning pin and a secondary positioning pin, the primary positioning pin being fixed to the base plate, the secondary positioning pin being retained and supported on the base plate so as to be movable relative to the primary positioning pin.

Patent Document 1, in which stack assemblies and lower cases having different sizes are supported using a single pallet for secondary batteries, suggests a method of attaching the stack assembly and lower case to the pallet, but does not suggest a method of aligning end plates with respect to an assembly of a U-frame and a top plate.

Patent Document 2 discloses a battery pack including a battery pack frame body including a base plate, a first side plate, and a second side plate, a top frame coupled to an upper part of the battery pack frame body, a first end plate, and a second end plate, wherein slits are formed in the first end plate and the second end plate such that the first end plate and the second end plate can be stably coupled to the top frame.

However, Patent Document 2 assumes the state in which the first end plate and the second end plate are well aligned with the top frame, and does not suggest a stable position alignment method.

Therefore, there is a need for technology capable of providing a method of accurately and easily determining coupling positions of end plates and both ends of an assembly of a U-frame and a top plate when the end plates are coupled to both ends of the assembly of the U-frame and the top plate.

### (Prior Art Documents)

(Patent Document 1) Korean Patent Application Publication No. 2012-0056816 (2012.06.04)
(Patent Document 2) Korean Patent Application Publication No. 2020-0039340 (2020.04.16)

### [Disclosure]

### [Technical Problem]

The present invention has been made in view of the above problems, and it is an object of the present invention to provide a battery pack having a mounting hole for assembly capable of accurately and easily determining coupling positions of end plates and both ends of an assembly of a U-frame and a top plate when the end plates are coupled to both ends of the assembly of the U-frame and the top plate and a method of assembling the battery pack.

### [Technical Solution]

A battery pack according to the present invention to accomplish the above object includes a battery cell stack including a plurality of battery cells, a pack frame body configured to allow the battery cell stack to be mounted therein, a top plate coupled to an upper part of the pack frame body, and a first end plate and a second end plate coupled to both ends of an assembly of the pack frame body and the top plate, respectively, wherein a mounting hole for assembly is formed in each of the first end plate and the second end plate.

A pair of mounting holes may be formed respectively in a left end and a right end of each of the first end plate and the second end plate.

The mounting hole may be coupled to a fixing pin formed on the assembly jig such that the fixing pin is inserted into the mounting hole.

The position tolerance of the fixing pin may be ϕ0.05, and the diameter of the fixing pin may be formed so as to be less than 95% of the diameter of the mounting hole.

The diameter of the fixing pin may be formed so as to be less than 90% of the diameter of the mounting hole.

The tolerance range of the diameter of the fixing pin may be less than ±0.2%.

The battery pack may further include a busbar frame coupled to electrode leads at each of both ends of the battery cell stack.

Four fixing pins, to which a pair of mounting holes formed in the first end plate and a pair of mounting holes formed in the second end plate may be fastened, may be formed on an upper surface of the assembly jig.

The assembly jig may include a first zone having two of the four fixing pins configured to be inserted into the mounting holes of the first end plate, a second zone having two of the four fixing pins configured to be inserted into the mounting holes of the second end plate, and a third zone located between the first zone and the second zone, wherein the first zone and the second zone are configured such that the first zone and the second zone are adjustable in position to move closer to or away from the third zone.

The present invention provides a method of assembling the battery pack, the method including a first step of mounting a battery cell stack in a pack frame body and coupling a top plate to the pack frame body, a second step of disposing a first end plate and a second end plate, respectively, at both ends of an assembly of the pack frame body and the top plate coupled in the first step, a third step of moving a battery pack pre-assembled in the second step to an assembly jig, a fourth step of aligning the pre-assembled battery pack with the assembly jig, and a fifth step of coupling the first end plate and the second end plate to the assembly of the pack frame body and the top plate.

The fourth step may be performed as a process of inserting a fixing pin of the assembly jig into a mounting hole of the pack frame body.

The method may further include a process of adjusting the position of a fixing pin of the assembly jig prior to the third step.

In addition, the present invention may provide various combinations of the above solving means.

### [Advantageous Effects]

According to the present invention, it is possible to reduce interference between a fixing pin of an assembly jig and a mounting hole of an end plate when an assembly of a U-frame and a top plate and the end plate is mounted to the assembly jig.

Consequently, it is possible to prevent the welding position of the end plate from being out of position during a process of mounting a pre-assembled battery pack to the assembly jig, whereby it is possible to reduce welding defects.

In addition, it is possible to prevent the occurrence of a gap between the end plate and the assembly of the U-frame and the top plate, and therefore it is possible to prevent assembly defects.

In addition, assembly is performed such that battery pack terminals provided on the end plate are disposed at certain positions, and therefore it is possible to reduce assembly tolerance when a plurality of battery packs is electrically connected to each other via the battery pack terminals.

### [Description of Drawings]

FIG. 1 is an exploded perspective view of a battery pack according to the present invention.
FIG. 2 is an exploded perspective view of the battery pack of FIG. 1 and an assembly jig.
FIG. 3 is a view showing an end plate of the battery pack of FIG. 1 with an enlarged view thereof.
FIG. 4 is a perspective view of the end plate of FIG. 3 and the assembly jig.
FIG. 5 is an exploded perspective view of a battery pack according to another embodiment and an assembly jig.
FIG. 6 shows the result of measurement of the interference rate between a pair of a first mounting hole and a fixing pin in 3DCS simulation results according to an example.
FIG. 7 shows the result of measurement of the interference rate between a pair of a second mounting hole and a fixing pin in the 3DCS simulation results according to the example.
FIG. 8 shows the result of measurement of the interference rate between a pair of a third mounting hole and a fixing pin in the 3DCS simulation results according to the example.
FIG. 9 shows the result of measurement of the interference rate between a pair of a fourth mounting hole and a fixing pin in the 3DCS simulation results according to the example.
FIG. 10 shows the result of measurement of the interference rate between a pair of a first mounting hole and a fixing pin in 3DCS simulation results according to a comparative example.
FIG. 11 shows the result of measurement of the interference rate between a pair of a second mounting hole and a fixing pin in the 3DCS simulation results according to the comparative example.
FIG. 12 shows the result of measurement of the interference rate between a pair of a third mounting hole and a fixing pin in the 3DCS simulation results according to the comparative example.
FIG. 13 shows the result of measurement of the interference rate between a pair of a fourth mounting hole and a fixing pin in the 3DCS simulation results according to the comparative example.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

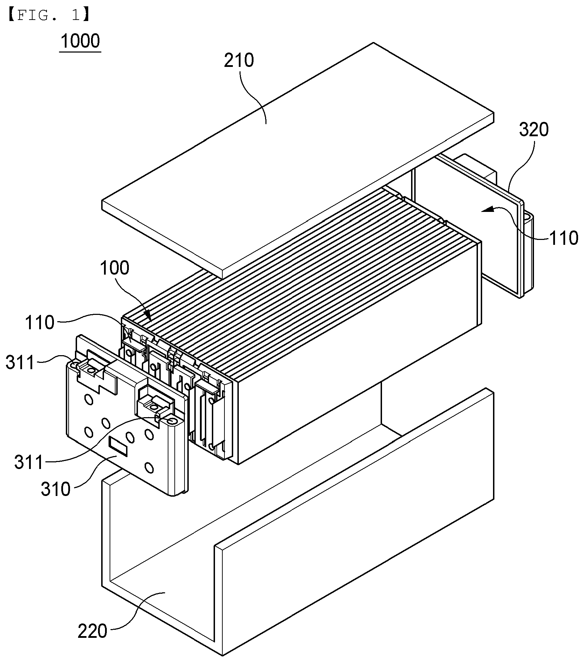

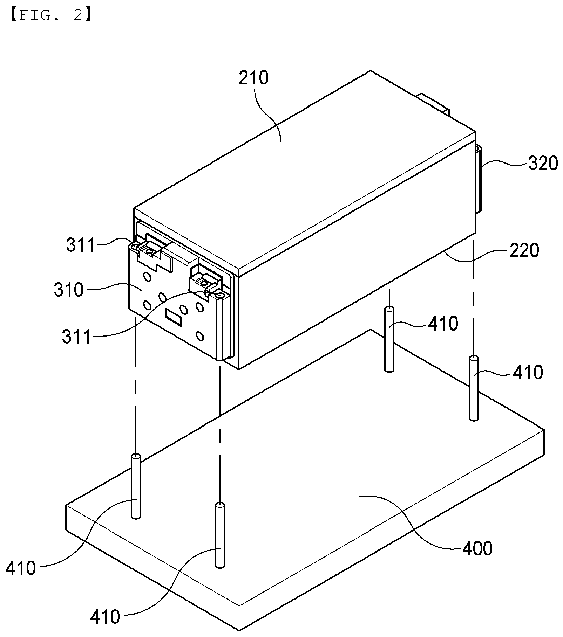

FIG. 1 is an exploded perspective view of a battery pack according to the present invention, and FIG. 2 is an exploded perspective view of the battery pack of FIG. 1 and an assembly jig.

Referring to FIGs. 1 and 2, the battery pack 1000 according to the present invention includes a battery cell stack 100 constituted by a plurality of battery cells, a pack frame body 220 in which the battery cell stack 100 is mounted, a top plate 210 coupled to an upper part of the pack frame body 220, and a first end plate 310 and a second end plate 320 coupled to both ends of an assembly of the pack frame body 220 and the top plate 210, respectively, wherein a mounting hole for assembly 311 is formed in each of the first end plate 310 and the second end plate 320.

A pair of mounting holes 311 is formed respectively in a left end and a right end of each of the first end plate 310 and the second end plate 320.

That is, four mounting holes 311 are located respectively at four corners of one battery pack 1000 in a plane.

Four fixing pins, to which the pair of mounting holes 311 formed in the first end plate 310 and the pair of mounting holes 311 formed in the second end plate 320 are fastened, are formed on an upper surface of an assembly jig 400.

A method of assembling a battery pack according to the present invention includes a first step of mounting a battery cell stack 100 in a pack frame body 220 and coupling a top plate 210 to the pack frame body 220, a second step of disposing a first end plate 310 and a second end plate 320 respectively at both ends of an assembly of the pack frame body 220 and the top plate 210 coupled in the first step, a third step of moving a battery pack pre-assembled in the second step to an assembly jig 400, a fourth step of aligning the pre-assembled battery pack with the assembly jig 400, and a fifth step of coupling the first end plate 310 and the second end plate 320 to the assembly of the pack frame body 220 and the top plate 210.

The first end plate 310 and the second end plate 320 are fixed to both ends of the assembly of the pack frame body 220 and the top plate 210 to prepare a pre-assembled battery pack, and fixing pins 410 of the assembly jig 400 are inserted into mounting holes 311 of the pre-assembled battery pack to fix the position of the pre-assembled battery pack on the assembly jig 400.

When the pre-assembled battery pack is disposed on the fixing pins 410 of the assembly jig 400, the first end plate 310 and the second end plate 320 must be located at the position where the first end plate and the second end plate are to be coupled to the assembly of the pack frame body 220 and the top plate 210.

That is, the fixing pins 410 of the assembly jig 400 serve not only to ensure that the first end plate 310 and the second end plate 320 are in tight contact with the assembly of the pack frame body 220 and the top plate 210 but also to guide a weld of the pack frame body 220, a weld of the top plate 210, a weld of the first end plate 310, and a weld of the second end plate 320 so as to coincide with each other.

Consequently, the position of the fixing pins 410 of the fixture jig 400 needs to be set in position to prevent welding defects when assembling the battery pack.

In a specific example, busbar frames 110 coupled to electrode leads at both ends of the battery cell stack 100 may be further included, wherein the busbar frames 110 are disposed between the battery cell stack 100 and the first end plate 310 and between the battery cell stack 100 and the second end plate 320, respectively, to electrically connect the plurality of battery cells to each other.

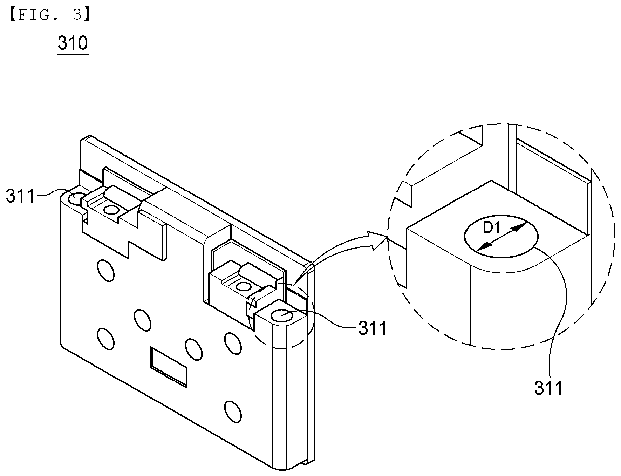

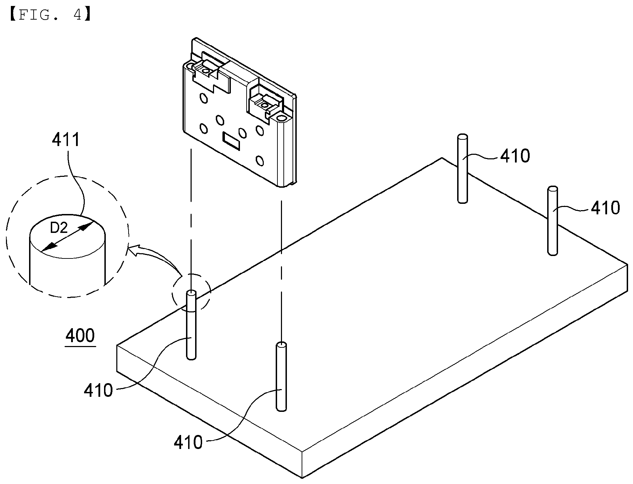

FIG. 3 is a view showing the end plate of the battery pack of FIG. 1 with an enlarged view thereof, and FIG. 4 is a perspective view of the end plate of FIG. 3 and the assembly jig.

When the pre-assembled battery pack is fitted onto the fixing pins 410 of the fixing jig 400, if the diameter D2 of each of the fixing pins is less than the diameter D1 of a corresponding one of the mounting holes, gaps may be generated between the first end plate 310 and the pack frame body 220 and between the second end plate 320 and the pack frame body 220, which may result in loose coupling therebetween when welding. In addition, the position of the first end plate 310 and the second end plate 320 may be out of alignment with the weld of the pack frame body 220 and the weld of the top plate 210, which may cause battery pack terminals located on the end plates to be out of position. This misalignment of the battery pack terminals may result in a misalignment when connecting a plurality of battery packs in series and/or parallel, whereby accurate connection may not be performed, resulting in defective battery packs.

On the other hand, if the diameter D2 of the fixing pin is greater than the diameter D1 of the mounting hole, when the fixing pin 410 is inserted into and coupled to the mounting hole 311, insertion is performed in a stiff state since the gap between an inner surface of the mounting hole 311 and the fixing pin 410 is too small, resulting in positional distortion of the pack frame body 220 and the top plate 210.

In the present invention, therefore, the position tolerance of the fixing pin 410 is limited to within ϕ0.05 based on the normal position of the fixing pin 410 of the fixing jig 400, and the diameter D2 of the fixing pin is formed so as to be less than 95% of the diameter D1 of the mounting hole. More specifically, the diameter D2 of the fixing pin is formed so as to be less than 90% of the diameter D1 of the mounting hole.

In this case, the tolerance range of the diameter D2 of the fixing pin is formed so as to be less than ±0.2% of the diameter of the fixing pin.

However, if the diameter D2 of the fixing pin is less than 85% of the diameter D1 of the mounting hole, the gap between the first end plate 310 and the pack frame body 220 and the gap between the second end plate 320 and the pack frame body 220 may be increased, resulting in assembly defects, which is undesirable.

More specifically, the diameter D2 of the fixing pin may be formed so as to be greater than 89% of the diameter D1 of the mounting hole.

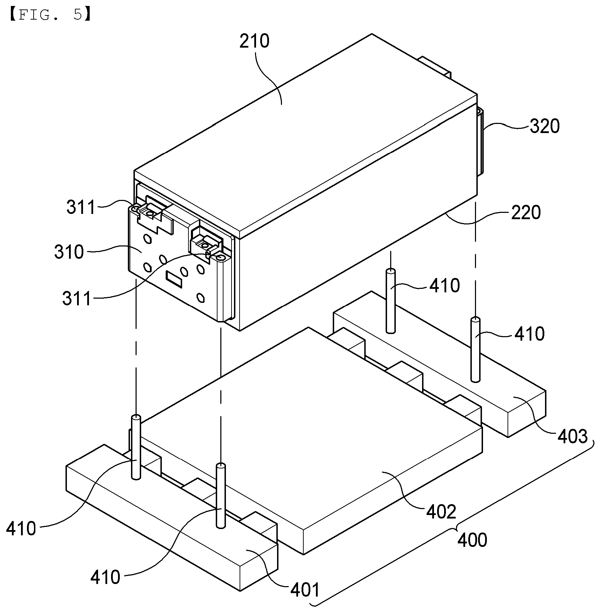

FIG. 5 is an exploded perspective view of a battery pack according to another embodiment and an assembly jig.

In a specific example, the assembly jig may be configured such that the position of a fixing pin is adjustable based on the overall length of a pre-assembled battery pack.

Specifically, the assembly jig may include a first zone 401 having two fixing pins 410 configured to be inserted into mounting holes 311 of a first end plate 310, a second zone 402 having two fixing pins 410 configured to be inserted into mounting holes 311 of a second end plate 320, and a third zone 403 located between the first zone 401 and the second zone 402, wherein the first zone 401 and the second zone 402 may be configured such that the first zone and the second zone are adjustable in position to move closer to or away from the third zone 403.

When this type of assembly jig is used, a process of adjusting the position of the fixing pins 410 of the assembly jig 400 so as to correspond to the position of the mounting holes 311 of the pre-assembled battery pack may be further included prior to the third step of moving the pre-assembled battery pack to the assembly jig.

Hereinafter, the present invention will be described with reference to an example. The example is provided only for easier understanding of the present invention and should not be construed as limiting the scope of the present invention.

### <Example>

The diameter of a fixing pin of an assembly jig was 7.3 mm, the diameter deviation was set to ±0.01, the position tolerance was set to ϕ0.05, and 500 simulations were performed to check whether interference occurred when the fixing pin was inserted into a mounting hole during a process of mounting a pre-assembled battery pack to the assembly jig.

At this time, the diameter of a mounting hole in an end plate was ϕ8.2 mm±0.1.

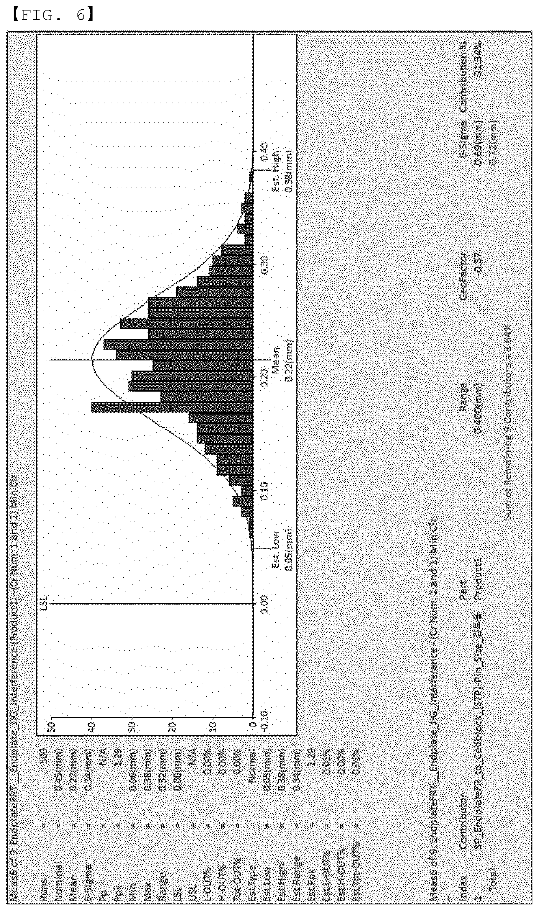

Two mounting holes were formed in each of two end plates, four fixing pins configured to be inserted respectively into the four mounting holes were formed in the assembly jig, and 3DCS simulation was performed to check whether interference occurred when the four pairs of mounting holes and fixing pins were coupled to each other. The results are shown in FIGs. 6 to 9.

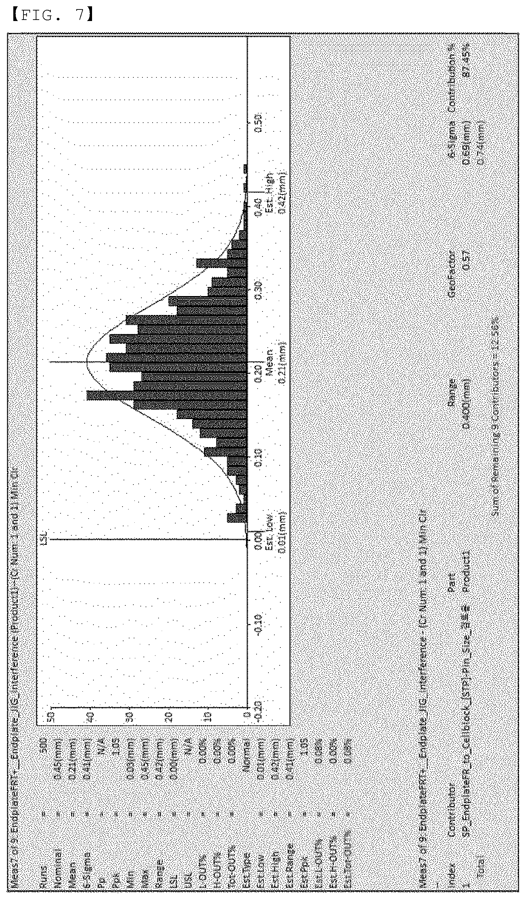

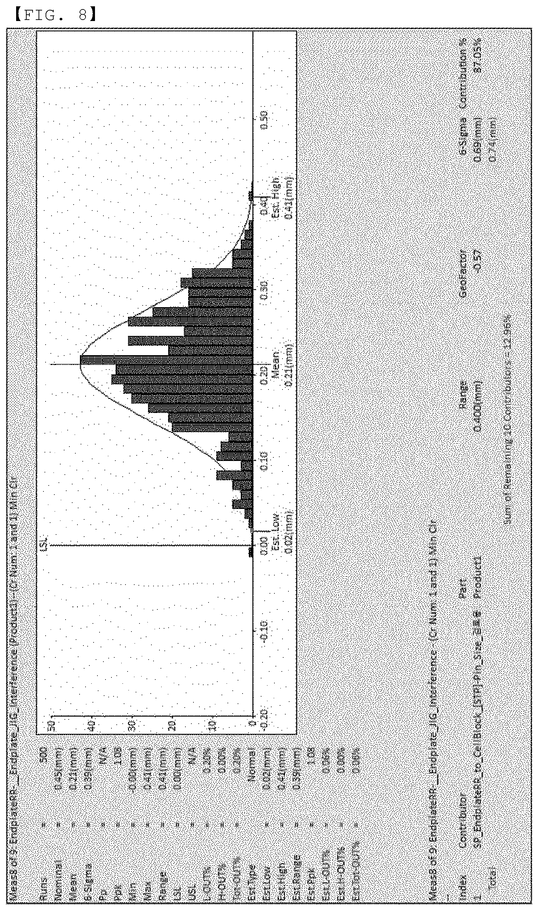

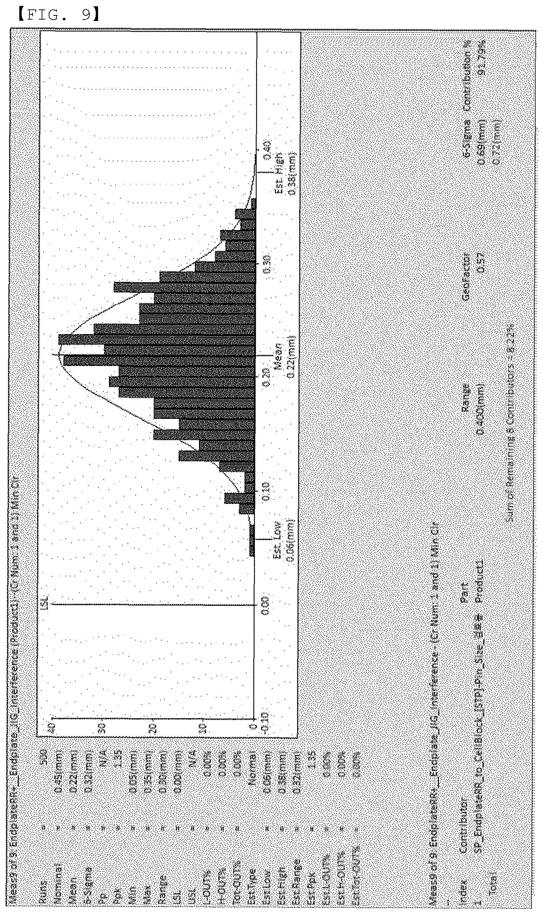

FIG. 6 shows the result of measurement of the interference rate between a pair of a first mounting hole and a fixing pin in the 3DCS simulation results according to the example, and FIG. 7 shows the result of measurement of the interference rate between a pair of a second mounting hole and a fixing pin in the 3DCS simulation results according to the example. FIG. 8 shows the result of measurement of the interference rate between a pair of a third mounting hole and a fixing pin in the 3DCS simulation results according to the example, and FIG. 9 shows the result of measurement of the interference rate between a pair of a fourth mounting hole and a fixing pin in the 3DCS simulation results according to the example.

The interference rate was 0%, as shown in FIGs. 6, 7, and 9, and the interference rate was 0.1%, as shown in FIG. 8.

### <Comparative Example>

The diameter of a fixing pin of an assembly jig was 7.8 mm, the diameter deviation was set to ±0.01, the position tolerance was set to ϕ0.05, and 500 simulations were performed to check whether interference occurred when the fixing pin was inserted into a mounting hole during a process of mounting a pre-assembled battery pack to the assembly jig.

At this time, the diameter of a mounting hole in an end plate was ϕ8.2 mm±0.1.

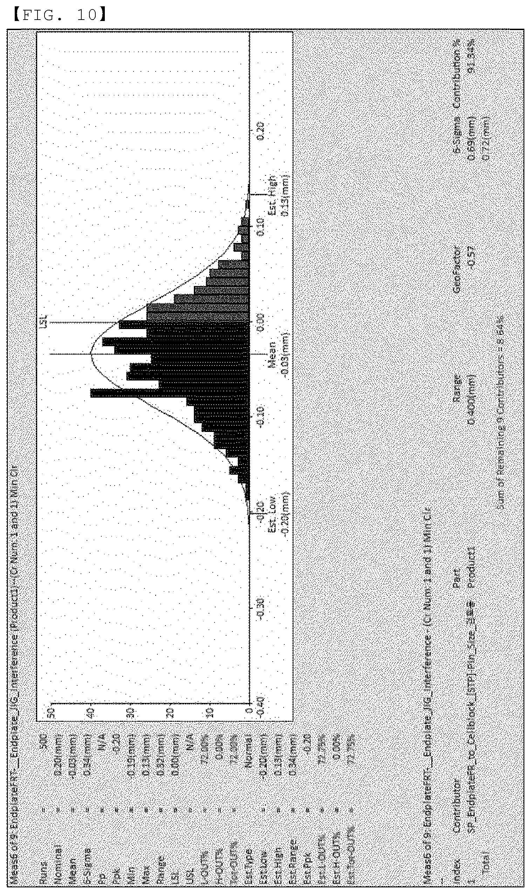

Two mounting holes were formed in each of two end plates, four fixing pins configured to be inserted respectively into the four mounting holes were formed in the assembly jig, and 3DCS simulation was performed to check whether interference occurred when the four pairs of mounting holes and fixing pins were coupled to each other. The results are shown in FIGs. 10 to 13.

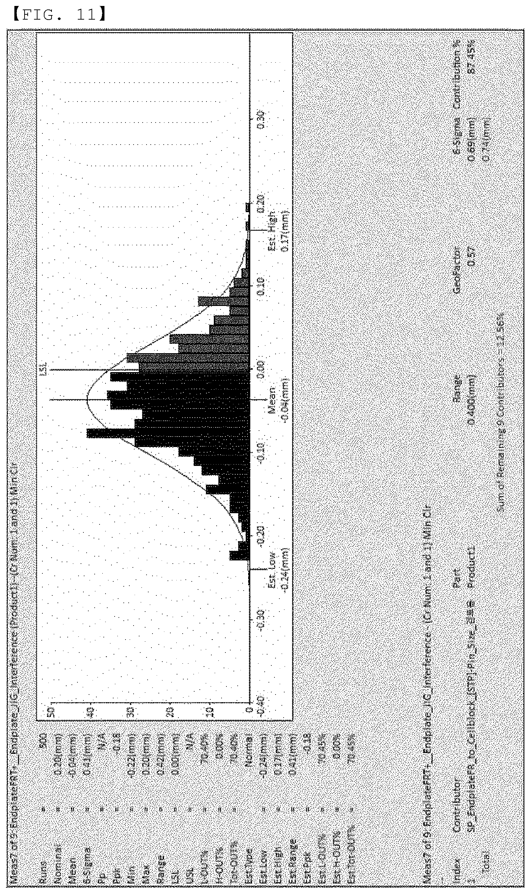

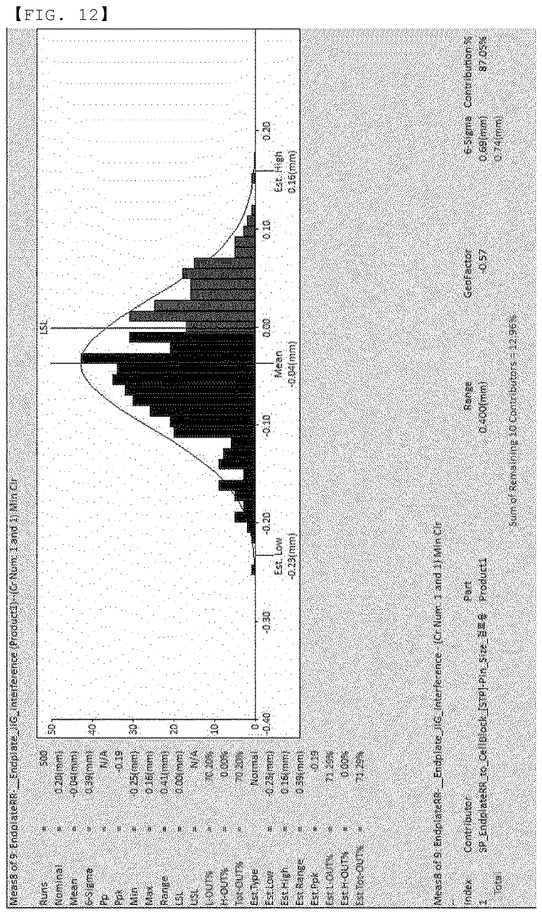

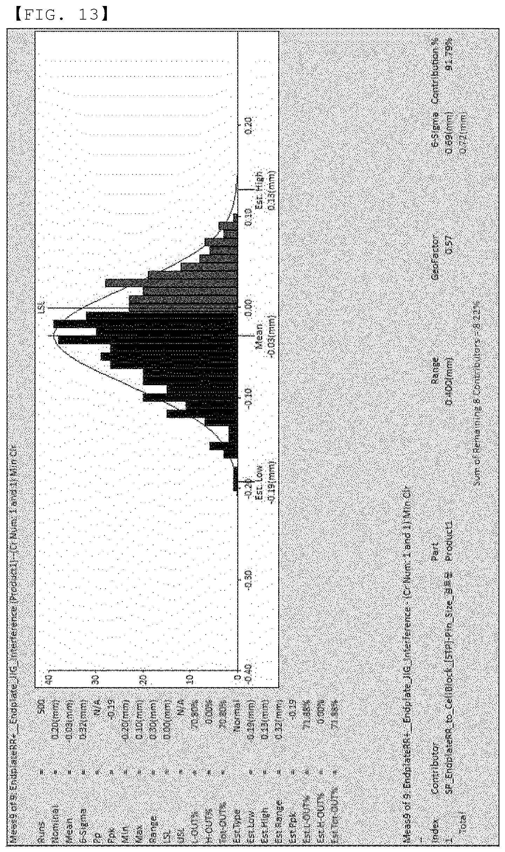

FIG. 10 shows the result of measurement of the interference rate between a pair of a first mounting hole and a fixing pin in the 3DCS simulation results according to the comparative example, and FIG. 11 shows the result of measurement of the interference rate between a pair of a second mounting hole and a fixing pin in the 3DCS simulation results according to the comparative example. FIG. 12 shows the result of measurement of the interference rate between a pair of a third mounting hole and a fixing pin in the 3DCS simulation results according to the comparative example, and FIG. 13 shows the result of measurement of the interference rate between a pair of a fourth mounting hole and a fixing pin in the 3DCS simulation results according to the comparative example. The interference rate was 72%, as shown in FIG. 10, the interference rate was 70.4%, as shown in FIG. 11, the interference rate was 70.2%, as shown in FIG. 12, and the interference rate was 70.8%, as shown in FIG. 13.

Comparing the results of the example and the comparative example, it can be seen that, when the position tolerance of the fixing pin is ϕ0.05 and the diameter of the fixing pin is formed so as to be less than 95% of the diameter of the mounting hole, as in the present invention, the interference rate when the fixing pin is inserted into the mounting hole is significantly reduced.

Those skilled in the art to which the present invention pertains will appreciate that various applications and modifications are possible within the scope of the present invention based on the above description.

### (Description of Reference Symbols)

100: Battery cell stack
110: Busbar frame
210: Top plate
220: Pack frame body
310: First end plate
311: Mounting hole
320: Second end plate
400: Assembly jig
401: First zone
402: Second zone
403: Third zone
410: Fixing pin
1000: Battery pack
D1: Diameter of mounting hole
D2: Diameter of fixing pin

## Claims

1. A battery pack comprising:
a battery cell stack comprising a plurality of battery cells;
a pack frame body configured to allow the battery cell stack to be mounted therein;
a top plate coupled to an upper part of the pack frame body; and
a first end plate and a second end plate coupled to both ends of an assembly of the pack frame body and the top plate, respectively, wherein
a mounting hole for assembly is formed in each of the first end plate and the second end plate.

2. The battery pack according to claim 1, wherein a pair of mounting holes is formed respectively in a left end and a right end of each of the first end plate and the second end plate.

3. The battery pack according to claim 1, wherein the mounting hole is coupled to a fixing pin formed on the assembly jig such that the fixing pin is inserted into the mounting hole.

4. The battery pack according to claim 3, wherein a position tolerance of the fixing pin is <1J0.05, and a diameter of the fixing pin is formed so as to be less than 95% of a diameter of the mounting hole.

5. The battery pack according to claim 4, wherein the diameter of the fixing pin is formed so as to be less than 90% of the diameter of the mounting hole.

6. The battery pack according to claim 4, wherein a tolerance range of the diameter of the fixing pin is less than ±0.2%.

7. The battery pack according to claim 1, further comprising a busbar frame coupled to electrode leads at each of both ends of the battery cell stack.

8. The battery pack according to claim 3, wherein four fixing pins, to which a pair of mounting holes formed in the first end plate and a pair of mounting holes formed in the second end plate are fastened, are formed on an upper surface of the assembly jig.

9. The battery pack according to claim 8, wherein the assembly jig comprises:
a first zone having two of the four fixing pins configured to be inserted into the mounting holes of the first end plate;
a second zone having two of the four fixing pins configured to be inserted into the mounting holes of the second end plate; and
a third zone located between the first zone and the second zone,
wherein the first zone and the second zone are configured such that the first zone and the second zone are adjustable in position to move closer to or away from the third zone.

10. A method of assembling the battery pack according to any one of claims 1 to 9, the method comprising:
a first step of mounting a battery cell stack in a pack frame body and coupling a top plate to the pack frame body;
a second step of disposing a first end plate and a second end plate, respectively, at both ends of an assembly of the pack frame body and the top plate coupled in the first step;
a third step of moving a battery pack pre-assembled in the second step to an assembly jig;
a fourth step of aligning the pre-assembled battery pack with the assembly jig; and
a fifth step of coupling the first end plate and the second end plate to the assembly of the pack frame body and the top plate.

11. The method according to claim 10, wherein the fourth step is performed as a process of inserting a fixing pin of the assembly jig into a mounting hole of the pack frame body.

12. The method according to claim 10, further comprising a process of adjusting a position of a fixing pin of the assembly jig prior to the third step.
